# EUROPEAN PATENT APPLICATION

(11) **EP 2 091 222 A1**
(43) Date of publication of application: **19.08.2009**
(21) Application number: 08468001.6
(22) Date of filing: 18.02.2008
(51) Int. Cl.: H04M 7/00, H04L 29/08, H04N 7/00

(54) **Click-to-dial service on IPTV**

(71) Applicant: Univerza v Ljubljani FAKULTETA ZA ELEKTROTEHNIKO, 1000 Ljubljana (SI)
(72) Inventor: Sedlar, Urban, 4264 Bohinjska Bistrica (SI); Kos, Andrej, 4273 Blejska Dobrava (SI); Bester, Janez, 4201 Zgornja Besnica (SI); Zebec, Luka, 1261 Ljubljana-Polje (SI)
(74) Representative: Ivancic, Bojan

(57) **Abstract**

The present invention is directed to Click-to-Dial service on IPTV. When a valid telephone number (502) appears in the TV picture of user's TV device (501), the telephone number is detected using optical character recognition. If the recognized string is found to be a valid telephone number, a large "Dial" button appears overlaid over the TV picture (503). By pushing a button on a remote control, a call between a user's fixed or mobile phone and the number displayed in the TV picture is initiated.

## Description

### FIELD OF THE INVENTION

The present invention relates generally to IP Television, and more specifically to Click-to-Dial service on IPTV.

### BACKGROUND OF THE INVENTION

The idea to transmit video signal over an IP network, dubbed IP Television (IPTV), has been present for years, but only lately has it become a prevailing trend and a strong focus of telecom operators and Internet Service Providers (ISPs) alike. IPTV offers many advantages over terrestrial, satellite and cable television, most notably an inherent return channel, which paves the way for interactive services. Innovative services are becoming the key differentiator between competing service providers. Many proposals and pilot deployments of such services have emerged already, ranging from electronic program guides (EPG) and simple games to social network-based and community-driven services over TV. To our knowledge, however, no generally available telephony support for IPTV users exists at present. The reason behind this appears to be a limited capability of customer premises equipment. While Voice-over-IP (VoIP) and even video conferencing functionalities already are available directly through the terminal equipment, this approach involves notable economic issues. At the same time, an independent telephony system is already in place, usually owned by a different service provider. With the support for open web services-based interfaces, the existing telephony system is becoming easier to control by third party application logic. An example of one such an open web services-based interface is Parlay X, which facilitates application development and allows developers to leverage their applications with an entire existing telephony network and its users.

### SUMMARY OF THE INVENTION

The aim of the present invention is to provide a telephony support for IPTV users, which can be implemented without significant costs and ties the existing IPTV and telephony systems together. It enables IPTV users to easily establish calls over mobile or fixed phones e.g. with the simple push of a button on their remote control. An exemplary embodiment based on Parlay X and Computer Supported Telecommunications Applications (CSTA) standards is disclosed, the latter being a common interface to existing telephony systems.

According to an embodiment of the invention, when a valid telephone number appears in the TV picture of user's TV device, the telephone number is detected by a software agent, located e.g. in the service provider's network, using optical character recognition (OCR). Techniques of video OCR are employed to recognize textual information from live TV picture. The text, obtained in such manner, is scanned for telephone numbers using regular expressions. If the recognized string is found to be a valid telephone number, a large "Dial" button appears overlaid over the TV picture. By pushing a button, e.g. a Dial button on the TV remote control, a call between a user's fixed or mobile phone and the number displayed in the TV picture is initiated.

### BRIEF DESCRIPTION OF THE DRAWINGS

Fig. 1 illustrates an exemplary IPTV click-to-dial system architecture.
Fig. 2 illustrates an exemplary Parlay X gateway architecture.
Fig. 3 illustrates an exemplary IPTV Click-to-Dial Scenario.
Fig. 4 illustrates an exemplary implementation of automatic video stream object recognition for phone number detection.
Fig. 5 illustrates a TV capture of an exemplary implemented user interface.
Fig. 6 illustrates another exemplary IPTV click-to-dial system architecture.

### DETAILED DESCRIPTION OF EXEMPLARY EMBODIMENTS

The detailed description set forth below in connection with the appended drawings is intended as a description of the presently preferred embodiments of the invention, and is not intended to represent the only forms in which the present invention may be constructed and/or utilized.

### IPTV Systems

IPTV is defined as multimedia services, such as television, video, audio, text, graphics and data, delivered over IP based networks managed to provide the required level of Quality of Service (QoS) / Quality of Experience (QoE), security, interactivity and reliability. Transmission of video streams over the network is an essential functionality of an IPTV system. It serves as a basis for elementary services of broadcast TV, content-on-demand and Network Personal Video Recorders and enables numerous supplementary services.

The general architecture of an IPTV system consists of four entities: content provider, service provider, network provider and the customer. The content provider owns the rights to the content and delivers it to the service provider, either as a live stream or in a pre-recorded form. The IPTV Service provider delivers the content to end-users by sending the data from the head-end over an IP-based network. To facilitate the transmission, the content needs to be compressed; this is done by encoders, which compress live video signal in real-time. If the content is offered on-demand, it is usually stored on a server in a form suitable for streaming over the network. In addition to content preparation and management, the service provider needs to take adequate security measures to protect the content from improper use (Digital Rights Management) and its users from fraud, as well as to provide a means for service management, billing and customer relationship management. Complexity of the entire workflow can be reduced by a software system called middleware, which serves as an abstraction layer over the IPTV system. It connects different components of the system and provides high level control to administrators and Application Programming Interfaces (APIs) to the developers. The network provider owns the communication channel between the service provider and end-users. The network must be managed to meet QoS requirements and is usually segmented into core, metro and access networks. Broadcast TV is transmitted to end-users using IP multicast, which reduces bandwidth requirements in the core and access networks. Content-on-demand is transmitted by unicasting it to individual users. Although the network provider and IPTV service provider are technically independent, it is not uncommon to find them together in a single ISP. After the video stream is sent over the network to the customer, it must be properly received, decoded and displayed. Although this can be done by any networked computer with adequate processing power to decode video, usually a separate device is used, called a set-top box (STB). This acts as an intermediate between the IP network and an analog or digital video input of the TV receiver. Apart from video decoding capability, the STB requires a client application to communicate with the IPTV system components at the head-end and manage the visual presentation of the content on the screen. This application can be regarded as an extension of the middleware to the STB.

Many separate areas of IPTV systems are covered by standards, from networking to video encoding, and a number of standardizing bodies are involved. Due to the lack of an overall framework, encompassing all IPTV system components, the International Telecommunication Union - Telecommunication Standardization Sector (ITU-T) IPTV Focus Group was established with the aim to coordinate the development of global IPTV standards taking into account the existing work of the standardizing bodies. IPTV systems are currently in commercial operation through a number of telecommunications service providers worldwide, while many are working on trial deployments and the introduction of new services. The most commonly used video encoding is MPEG-2, which is gradually being replaced by H.264/MPEG-4 Advanced Video Coding (AVC) or in some cases by Microsoft^{®} proprietary VC-1. Both have approximately two times better compression efficiency than MPEG-2. Codices are network agnostic, tied only to the choice of encoders and decoding support of terminal equipment. Middleware offers even more possibilities than video encoding; since it can be implemented from scratch in simple pilot deployments, many solutions exist. There is, however, a notable trend in popularity growth of the Hypertext Markup Language (HTML) and JavaScript based presentation engine, since it allows backwards compatibility with standard web sites and allows rapid service development using off-the-shelf development tools and existing web development frameworks.

### Telephony System

Telephony system today can be viewed as a mix of traditional and emerging networks, including PSTN, ISDN, GSM, VoIP, GPRS, UMTS, cdma2000, HSDPA and WiMAX, where gateways are used to provide connectivity and interoperability. Today's hybrid network is expected to converge to IP on the network layer. While the majority of classic telephony services still reside on the call control layer with just few of them dislocated in special network elements, newer services are mostly provided using application servers and service gateways.

The traditional approach to service development and deployment was based on the concepts of Intelligent Networks (IN) and Customized Applications for Mobile networks Enhanced Logic (CAMEL). These architectures used Intelligent Network Application Part (INAP), CSTA, Camel Application Part (CAP), Mobile Application Part (MAP) and other protocols. This approach has proven to be stable and reliable and currently there are many systems deployed based on these architectures. However, thorough understanding of the protocols and architectures is required for service development, which was consecutively always kept in the domain of telecom vendors and operators. Thus, only a small number of innovative and converged services were developed and used in the past.

Next Generation Network (NGN) architecture presents a different approach, with broadband QoS-enabled IP network at its core. Such networks are able to support various services, since in NGN service-related functions are independent from underlying transport-related technologies. NGN service control is based on concepts such as IP Multimedia Subsystem (IMS) and Parlay, using different protocols and interfaces, including web services, Session Initiation Protocol (SIP), Common Object Request Broker Architecture (CORBA) and Java. Their main characteristic is openness. This, together with the decoupling of service and transport layers, enables flexible and easy service development and deployment for both service providers and third party developers.

### Exemplary Interfaces

A web service is a collection of standards and protocols, which allows interoperable machine-to-machine interaction and data exchange over a network. It is standardized by the World Wide Web Consortium (W3C). The interface for communication is described in Web Service Description Language (WSDL). The communication itself is performed by exchanging Simple Object Access Protocol (SOAP) messages, which are based on the Extensible Markup Language (XML) format. The messages are usually transferred over Hypertext Transfer Protocol (HTTP), although other underlying protocols can be used as well. To facilitate web service discovery, Universal Description Discovery and Integration (UDDI) protocol was developed, which enables the creation of web service directories.

Parlay X is one of the standards for NGN service development. It is standardized by the European Telecommunications Standards Institute (ETSI) and offers a set of simple-to-use, high-level web services-based APIs, which enable applications to access the telephony network functionalities. Being one of the service deployment choices for the emerging All-Over-IP IMS network, Parlay X is, in our opinion, one of the most promising concepts for the future of service delivery. Due to the abstract nature of Parlay X APIs, they are not tied to any specific telephony protocol and can be used in traditional, NGN and IMS networks. The APIs are usually implemented on a gateway, positioned between application servers and network elements. The communication between applications and the Parlay X interface of the gateway is performed by exchanging SOAP messages over HTTP protocol. Parlay X version 2.1 consists of 13 web services, including Third Party Call, which allows call initiation and can be used for click-to-dial applications.

CSTA is a European Computer Manufacturers Association (ECMA) standard, intended for use in Computer Telephony Integration (CTI). It provides an abstraction layer for telecommunications applications, which is independent of underlying protocols and devices. CSTA exposes advanced features of a communications platform to applications developers, providing them with comprehensive access to the call handling mechanisms. Currently, three versions of the CSTA standard exist. Phase I provides basic call control services, while Phase II and III further extend them. Currently, CSTA Phase I is prevailing in real-life implementations while CSTA Phase III allows a web service-based implementation. Phase I and Phase II CSTA protocol messages are structured using Abstract Syntax Notation One (ASN.1). The complexity of this binary encoded scheme is one of the reasons why not many pure CSTA applications are available. Another reason is the required low-level conceptual understanding of telephony systems architecture and functionalities.

### An Exemplary System Architecture

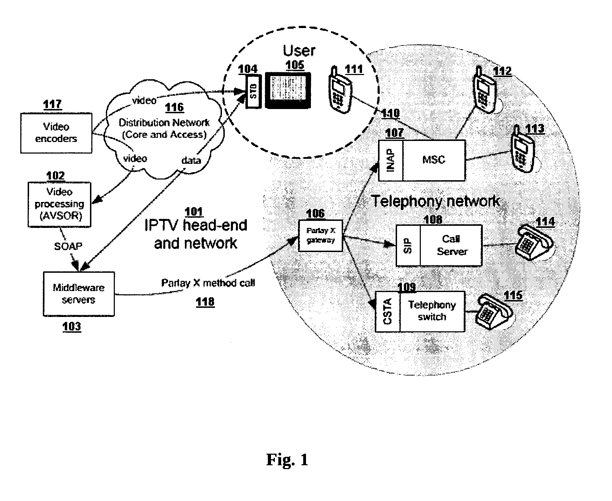

Architecture for connecting an IPTV system to the telephony system, allowing an IPTV user to establish a call between his mobile or fixed telephone and any valid phone number, is presented in Fig. 1. Integration of both domains is based on a gateway that provides connectivity to traditional telephony network elements using web services-based Parlay X API. A server-side system for extracting telephone numbers from live video stream was added which allows users to easily initiate a call to any number displayed on the TV screen.

### Parlay X Gateway Architecture

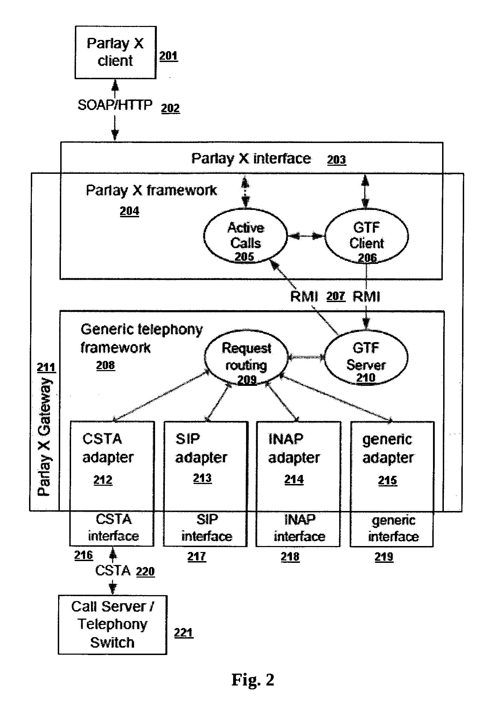

Due to the fact that traditional telephony interfaces are far more widely available than the highly abstracted Parlay X API, a translating gateway is needed to allow a Parlay X client to connect to telephony network elements. The general architecture of the gateway is shown in Fig. 2. The gateway comprises a Parlay X framework (204) for open web services-based communication and a Generic Telephony Framework (GTF, 208), which ultimately provides interfaces to supported traditional interfaces, such as CSTA (212).

The Parlay X framework consists of three sub-modules. Parlay X interface (203) presents an entry point for SOAP Parlay X method calls (202). These calls are realized through communication with either of the remaining two modules, depending on the nature of the Parlay X method. The module ActiveCalls (205) provides a store for information about currently active calls and is accessed from the interface module in the case when only information about an active call is needed. If the Parlay X method requires a message to be sent to the network element API through the protocol adapter, the request is forwarded to the GTF (208) using a GTF Client module (206). This happens by a Remote Method Invocation (RMI) in the server module of the GTF (210).

The GTF (208) serves as an abstraction layer for generic telephony functionalities. It comprises two main sub-modules and an arbitrary number of protocol adapters. The GTF Server (210) receives method calls from the client in the Parlay X framework (206), processes them and forwards them to the appropriate protocol adapter (212-215) using request routing (209). A protocol adapter provides mappings to supported protocol. Each adapter module runs as a separate thread and communicates with the corresponding traditional interface of a network element, which can be a call server (221), telephony switch (221), class5 switch or a Mobile Switching Center (MSC).

### Automatic Object Recognition

IPTV Click-to-dial architecture can be highly leveraged by the automated means of phone number recognition from live video. This is done by detecting a general set of objects (letters, symbols) in the video. We define a concept of Automatic Video Stream Object Recognition (AVSOR), which allows analysis of the video stream and extraction of desired information using appropriate input modules. We focus on the recognition of text, allowing immediate application in the proposed system. In general, detecting and recognizing text visually appearing in images is termed optical character recognition (OCR). Recognition of typewritten text on a uniform background has already become highly reliable and is used routinely to scan books and documents. Solutions for recognizing text in video streams rely on the decomposition of video into individual frames; on sequences of static images, a standard OCR engine can be used. However, the textual information on complex (non-homogenous) backgrounds is difficult to recognize without appropriate preprocessing. Different detection and recognition techniques must be used to provide satisfactory results. To communicate the telephone numbers detected by AVSOR to the middleware server we define and use a web service for its ease of implementation and cross-platform compatibility.

### System Integration

The components are integrated as seen in Fig. 1. At the IPTV head-end (101), a video processing system (102) receives the selected video streams over the core network of the provider (116). Video streams are analyzed using the AVSOR method and occurrences of telephone numbers are communicated to the middleware server (103) using a web service. The application logic of the middleware server stores the number in a database the moment it is received. From the database, the numbers are transmitted to any STB client application (104) requesting them. As the STB client application receives the number, it renders it onscreen (105) and allows the user to initiate the call. In case the user chooses to ignore it, it disappears shortly after it is not detected in the video anymore. If the user initiates the call, the middleware server is notified first. Its application logic triggers a Parlay X method call (118) on the Parlay X gateway (106), which translates the request to the selected protocol and sends it to a telephony network element (107). The network element consequently establishes the call (110) and reports its status back to the gateway, which always holds the latest information about the status of the call. When the client application of the STB requests the status of the call to refresh the information displayed onscreen, the request is again received by the middleware server. The latter calls a different Parlay X method on the gateway, inquiring about the status of the call. The gateway responds immediately, providing the status of the call from internal memory.

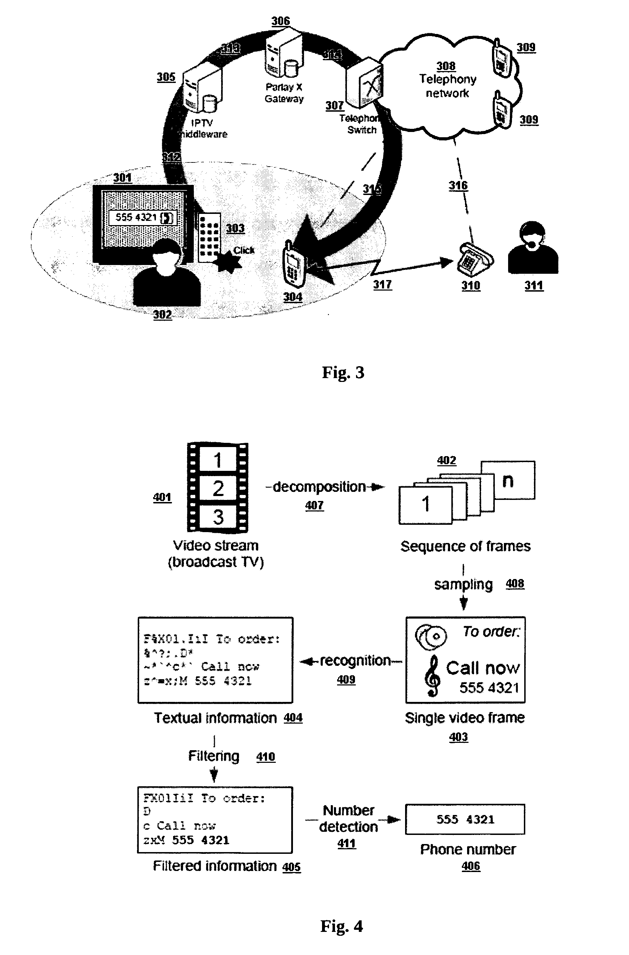

An integrated system allows different usage scenarios, which are all based on a single underlying mechanism, presented in Fig. 3. The call is initiated by the user (302) through the IPTV system (301, 303, 305) and returns back to the user through the telephony system (304, 307).

### Exemplary Scenarios

Three exemplary real-life scenarios are disclosed in the following paragraphs illustrating use of integrated IPTV click-to-dial architecture.

Alice, an IP television user, is watching her favorite TV show and wishes to respond to a survey by dialing a number on the screen and casting a vote. When phone number is shown in the TV station's on-screen graphic, a large dial button appears next to it. As soon as Alice pushes the dial button using her remote control, a call to her number, which she provided earlier, is initiated. Her phone rings and when she answers it, the connection to the voting service is established. The voting service terminates the connection as soon as the vote is recorded.

Bob, watching a different channel, where a call-in show is running, wishes to dial a number, displayed in the on-screen graphic to state an opinion. By using his remote control and pushing the dial button, Bob establishes a connection and can monitor the status and duration of the call on the screen, overlaying the TV picture. He decides to dismiss the on-screen status display and resumes watching while he talks on the phone.

Charlie catches a glimpse of a TV advertisement while channel surfing, which captures his attention and in the spur of a moment he decides he wants to order the product by dialing the phone number in the advertisement. The advertisement disappears, but the dial button remains on screen for several seconds and still allows Charlie to establish the call to the previously displayed number. When the call is established, Charlie monitors its status on the TV screen; later he decides to terminate the call using his remote control.

### An Exemplary Implementation

A working implementation of the click-to-dial system for SiOL IPTV users was done, based on an Iskratel SI2000 telephony switch with a CSTA interface. To communicate with the switch, the overall gateway architecture with selected protocol adapter was implemented. Additionally, the AVSOR system for phone number detection was assembled, which feeds the numbers to the middleware server. A modified STB client application displays the numbers on the screen. The details of individual elements are presented below.

### Parlay X / CSTA Gateway

A Parlay X gateway with modular architecture was developed in Java and supported with Tomcat web server and Axis framework for web service integration. Furthermore, a single protocol adapter was implemented, providing a functional Parlay X to CSTA transformation. The mappings between Parlay X and CSTA protocols are based on similarities, which can be identified between call control functionalities of both protocols. These include: Third Party Call, Call Notification (including Call Direction) and a limited set of Call Handling and Multimedia Conference functions. The implemented protocol adapter provides mappings of Parlay X web services onto appropriate CSTA methods, as seen in Table 1. Parlay X method calls are translated to ASN.1 messages, understood by CSTA-enabled network elements.

**Table 1: Parlay X to CSTA mapping**

| **Parlay X Method** | **CSTA Service** |
|---|---|
| **Third Party Call web service** | |
| makecall | Monitor Start |
| | Make Call |
| getCallInformation | Call Event Reports |
| endCall | Clear Connection |
| cancelcall | Monitor Stop |

| **Multimedia Conference web service** | |
|---|---|
| createConference | / |
| inviteParticipant | Monitor Start |
| | Make Call |
| | Consultation Call |
| | Conference Call |
| getConferenceInfo | Call Event Reports |
| endConference | Clear Connection |
| | Monitor Stop |

| **Call Handling web service** | |
|---|---|
| setRules | Monitor Start |
| clearRules | Set Feature |
| | Monitor Stop |

The implemented CSTA protocol adapter is only one of the possibilities. It should be noted that telephony network elements are interconnected by a signaling network, which allows the requests to be further transferred to elements with no compatible interfaces.

### Phone Number Detection

The OCR system is used as a basis for our AVSOR implementation. The system is implemented using freely available software solutions (mplayer, djpeg and tesseract) as seen on Fig. 4. To reduce processing requirements for the OCR, a single channel is chosen and the video (401, 402) is sampled (408) with temporal resolution of 2 seconds (at the rate of 25 frames/s, one frame in 50 is kept). Since phone numbers are usually displayed longer than that, this is assumed to be enough for detection. Each acquired frame (403) is fed to the OCR engine (409). No prior preprocessing is used to further reduce the complexity of the process. After the extraction of textual data (404), non-alphanumeric characters are filtered out (410). This removes a substantial amount of noise caused by misinterpretations of the image due to the absence of preprocessing. Finally, the filtered data (405) is matched (411) against most common phone number formats for local region. Valid phone numbers (406) obtained in the process are pushed to the middleware server using a web service to invoke a server-side method, which stores the number in the database, together with exact timestamp of its appearance.

### IPTV Middleware Integration

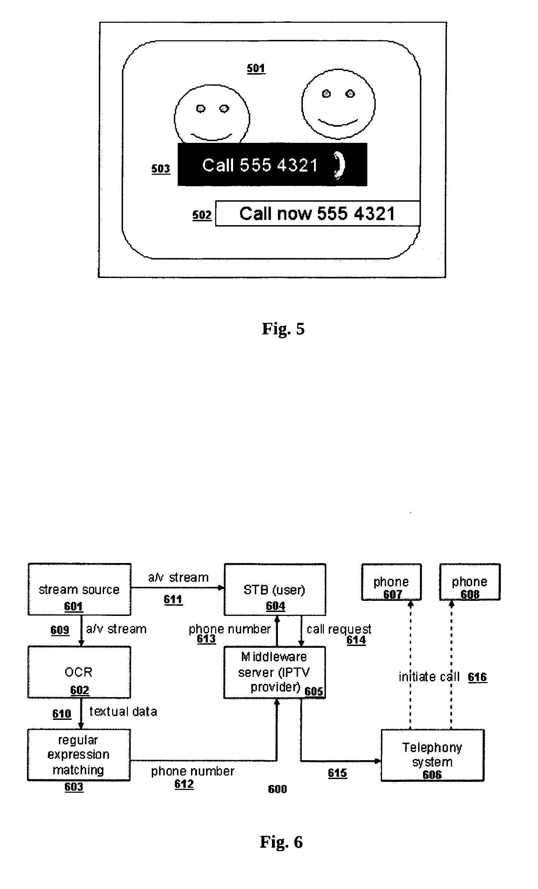

The presented architecture is tied to the network of IPTV service provider SiOL, which uses a HTML and JavaScript based presentation engine as part of their middleware. The communication between middleware servers and the client is based on Hypertext Transfer Protocol serving simple HTML pages, enriched with client side scripting code to provide interactivity. Client side application logic on the STB is modified to include a separate module for click-to-dial functionality, performing periodic lookups to the middleware server, where the time-stamped telephone number information is stored in the database. When a number is obtained from the database, the client side application logic displays it in a large semitransparent rectangle on the television screen (503), along with a clickable dial button (Fig. 5). At the press of the button using a remote control, a method on the middleware server is called which relays the method call to the Parlay X gateway, invoking the makeCall method. Once the call is initiated, the client-side logic in the STB polls the middleware server at periodic intervals for the status of the call. Each call is forwarded to the Parlay X gateway, invoking there a getCallInformation method and returning the call status to the middleware server, where the relevant information is extracted. Finally the information is returned to the STB client, where it is rendered on-screen to reflect the status of the call.

### Another Embodiment of the Invention

Techniques of video optical character recognition (OCR) are employed to recognize textual information from live TV picture. The text, obtained in such manner, is scanned for telephone numbers using regular expressions. When a number is found, it is displayed on the TV screen, together with a button, which allows users to establish calls to the shown number.

As depicted on Fig. 5, when a valid telephone number (502) appears in the TV picture (501), it is detected by the software agent in the service provider's network using optical character recognition. If the recognized string is found to be a valid telephone number, a large "Dial" button appears overlaid over the picture (503). By the button on the remote control, a call between the user's fixed or mobile phone and the number displayed on the screen is initiated.

Fig. 6 depicts a diagram of the system and necessary components that provide the desired functionality:
- stream source (601) can be a hardware or software video encoder, device for streaming pre-recorded video material or any other device, capable of delivering encoded video stream over an IP network. Stream source outputs the video in the form of IP packets (609, 611), either using unicast or multicast mode.
- STB (Set-top box) (604) is customer premises equipment, capable of receiving encoded video over an IP network (611), decoding the video and outputting it in the form, suitable for display on television screen. STB also features a remote control, which allows the user to change channels and perform different actions, supported by the STB.
- Middleware server (605) is a server, usually owned by the service provider. It allows effortless integration of different IPTV system elements, facilitating the management and administration of the entire IPTV system, including subscriptions, billing, content management, etc. Middleware system also provides user interface management and integration with STB.
- OCR unit (602) is a generic element, capable of performing optical character recognition on live video stream and outputting the time-stamped textual data (610).
- Regular expression matching unit (603) performs detection of telephone number sequences in the textual data, provided from the OCR unit and feeds them to the middleware (612).
- Telephony system entity (606) in the diagram represents an entry point (615) to existing telephony network using standardized, preferably open, interfaces. Through these interfaces, individual telephony network elements, including fixed and mobile phones (607, 608) can be controlled.

The process flow as disclosed on Fig. 6 can be divided into following actions:
- Stream source (601) outputs an encoded audio/video IPTV stream (611), which propagates through the network, and is finally received by a STB (604) at the user's premises. STB decodes the video and displays it on the TV screen.
- Simultaneously, the video stream is sent (609) to the OCR unit (602), which performs character recognition and extracts textual data from live TV picture.
- Textual data, obtained in such manner, is sent (610) to regular expression matching unit (603), which detects valid phone numbers in the text.
- Obtained phone numbers are pushed (612) to the middleware server (605), which in turn sends them (613) to appropriate STB (604) (or more STBs if the stream is simultaneously multicast to a large number of subscribers).
- The numbers are displayed on the screen by the client-side STB application.
- When a button on remote control is pushed, the client side application in the STB issues a dial command (614) to the middleware server (605).
- Middleware server (605) reformats the command and forwards it (615) to the telephony system entry point (606), which can be a purpose built protocol conversion gateway or any suitable exposed interface.
- Telephony system (606) interprets the command and initiates a call (616) between requested parties; party A (607) being the user's telephone number (provided earlier in the middleware settings dialog) and party B (608) the number, displayed on the screen by the client-side STB application.

The foregoing illustrates some of the possibilities for practicing the invention. Many other embodiments are possible within the scope of the invention. It is, therefore, intended that the foregoing description in connection with the appended drawings be regarded as illustrative rather than limiting, and that the scope of the invention is given by the appended claims together with their full range of equivalents.

## Claims

1. A method for Click-to-Dial service on IPTV, the method comprising:
- detecting (602) a valid telephone number (502) in an IPTV video stream (609);
- displaying said valid telephone number (503) on a screen (501);
- pushing a dial button (303);
- establishing a call (616) between a fixed or mobile phone (607) and said valid phone number (608).

2. The method of claim 1, whereby the step of detecting a valid telephone number comprises the following steps:
- obtaining textual data by performing OCR of the IPTV video stream (602);
- performing regular expression matching (603) of said textual data in order to detect a valid phone number.

3. The method of claim 1, whereby the step of establishing a call comprises the steps of:
- issuing a dial command from a client-side application to a middleware server (312);
- the middleware server (305) forwarding said command (313) to a telephony system entry point (306);
- telephony system (307, 308) initiating a call (315, 316) between said fixed or mobile phone (304) and said valid phone number (310).

4. The method of claim 3 further comprising the following steps:
- receiving (313) a Parlay X makeCall command at a telephony system entry point (306);
- creating equivalent CSTA Service commands "Monitor Start" and "Make Call";
- sending (314) the equivalent CSTA Service commands to the telephony system (307, 308).

5. The method of claim 1, whereby the step of pushing a dial button comprises pushing a dial button located on a user's remote control (303).

6. A middleware server (605) comprising:
- means for receiving a valid phone number (612) from an OCR unit (602, 603);
- means for forwarding said valid phone number (613) to a user terminal equipment (604);
- means for receiving a call request (614) from said user terminal equipment (604);
- means for forwarding said call request (615) to a telephony system (606).

7. The middleware server (605) of claim 6, further comprising means for reformatting said received call request before forwarding it to a telephony system (606).

8. A user terminal equipment (604) comprising:
- means for receiving a valid phone number (613) from a middleware server (605);
- means for receiving a dial command (303) from a user (302);
- means for sending a call request (614) to the middleware server (605).

9. The user terminal equipment (604) of claim 8, whereby the user terminal equipment being an IPTV set-top-box.

10. The user terminal equipment (604) of claim 8, further comprising means for receiving and/or storing a telephone number of user's fixed or mobile phone (304).

11. The user terminal equipment (301) of claim 8, wherein said call request (312) is a request to establish a connection (315, 316) between said valid phone number (310) and user's fixed or mobile phone (304).

12. A system (600) comprising:
- a middleware server (605) of claims 6-7;
- a user terminal equipment (604) of claims 8-11;
- an OCR unit (602, 603);
- a telephony system (606).

13. The system of claim 12, whereby the OCR unit (602, 603) further comprises means for detecting a valid telephone number in an IPTV video stream (609).

14. The system of claim 13, whereby the means for detecting a valid telephone number further comprises:
- means for obtaining textual data by performing OCR of the IPTV video stream (602);
- means for performing regular expression matching of said textual data in order to detect a valid phone number (603).

15. The system of claim 12, further comprising a remote control device (303) adapted to transfer user commands to the user terminal equipment, whereby the remote control device includes a dial button.

16. A computer program product comprising a set of instructions, which, when executed on a computer, cause the computer to perform method steps of any of claims 1-5.

17. A computer readable medium storing thereon the computer program product of claim 16.
